# EUROPÄISCHE PATENTSCHRIFT

(11) **EP 1 828 761 B1**
(45) Veröffentlichungstag und Bekanntmachung des Hinweises auf die Patenterteilung: **22.08.2012**
(21) Anmeldenummer: 05813660.7
(22) Anmeldetag: 29.11.2005
(51) Int. Cl.: G01N 27/62, G01N 33/00, G01M 3/20

(54) **SELEKTIVER GASSENSOR**
SELECTIVE GAS SENSOR
DETECTEUR DE GAZ SELECTIF

(30) Priorität: 23.12.2004 DE 102004062101
(43) Veröffentlichungstag der Anmeldung: 05.09.2007
(73) Patentinhaber: Inficon GmbH, 50968 Köln (DE)
(72) Erfinder: GROSSE BLEY, Werner, 53125 Bonn (DE)
(74) Vertreter: von Kreisler Selting Werner
(86) Internationale Anmeldenummer: PCT/EP2005/056317
(87) Internationale Veröffentlichungsnummer: WO 2006/069876

(56) Entgegenhaltungen:
- WO-A-95/04921
- WO-A-96/41677
- WO-A-03/052371
- DE-A1- 10 031 882
- US-A- 3 867 631
- US-A- 4 477 778
- ZINSMEISTER G: "Über ein Lecksuchgerät mit Kaltkathoden-Ionisationsmanometer" VAKUUM-TECHNIK, Bd. 9, Nr. 4, 31. Mai 1960 (1960-05-31), Seiten 101-104, XP009061356 Berlin

## Beschreibung

Die Erfindung betrifft einen selektiven Gassensor mit einem evakuierten Gehäuse, das durch eine selektiv durchlässige Membran abgeschlossen ist, und ein Gasdrucksensor mit mindestens zwei Elektroden enthält.

In EP 0 831 964 B1 (Leybold-Vakuum GmbH) ist ein selektiver Gassensor beschrieben, der ein evakuiertes Gehäuse aufweist, welches durch eine Membran abgeschlossen ist. Die Membran besteht aus einem Silizium-Werkstoff wie Quarz, Quarzglas, Pyrex-Glas, Siliziumoxid, Siliziumnitrit, Siliziumoxinitrit oder Siliziumkarbid, der auf einer Siliziumscheibe angeordnet ist. Die Siliziumscheibe weist Aussparungen in Form von Fenstern auf, in welchen Heizwände auf der Membran angeordnet sind. Eine derartige Membran ist selektiv durchlässig für leichte Gase wie Helium oder Wasserstoff, und undurchlässig für andere Gase. Durch Durchtritt von Gas durch die Membran wird der Druck im Inneren des Gehäuses, wo zunächst Hochvakuum herrscht, erhöht. Die übrigen Wände des Gehäuses, mit Ausnahme der Membran, sind vakuumdicht.

In DE 100 31 882 A1 (Leybold-Vakuum GmbH) ist ein Sensor für Helium oder Wasserstoff beschrieben, der von dem Prinzip der selektiv durchlässigen Membran Gebrauch macht. Das Gehäuse des Sensors besteht aus Glas und der selektiv wirkende Durchlass ist eine Membran aus einem Silizium-Werkstoff, auf der eine mit Durchbrechungen versehene Siliziumscheibe, sowie eine Heizung angeordnet sind. In dem Gehäuse befindet sich ein Gasdrucksensor in Form einer Penning-Anordnung oder eines Magnetrons, der auf den Totaldruck des in das Gehäuse eingedrungenen Gases reagiert. Auf diese Weise kann ein relativ einfacher Gasdrucksensor anstelle eines Massenspektrometers verwendet werden. Der Gasdrucksensor weist mindestens zwei in dem Gehäuse angeordnete Elektroden auf und zusätzlich einen außerhalb des Gehäuses angeordneten Magneten, der ein durch das Gehäuse hindurchgehendes Magnetfeld erzeugt. Das Glasgehäuse ist stoßempfindlich und leicht zerbrechlich. Das aus Borosilikatglas bestehende Gehäuse hat etwa den gleichen thermischen Ausdehnungskoeffizienten wie das Silizium der Membran, so dass beide durch anodisches Bonden bzw. Diffusionsschweißen verbunden werden können. Das Gehäuse darf aufgrund des darin herrschenden Hochvakuums keine Dichtungen oder Klebstoffe aufweisen, die eine Gasabgabe bewirken und damit die Nachweisgrenze verschlechtern würden.

Der Erfindung liegt die Aufgabe zugrunde, einen selektiven Gassensor zu schaffen, der ein robustes Gehäuse aufweist, und somit mechanisch unempfindlich ist.

Der Gassensor nach der vorliegenden Erfindung ist durch den Patentanspruch 1 definiert. Hiernach ist vorgesehen, dass das Gehäuse aus Metall besteht und eine Membranwand mit einem metallischen Rahmen aufweist, an den eine Glasscheibe angebondet ist, und dass die Glasscheibe ein Loch enthält, welches durch die Membran verschlossen ist.

Der Gassensor benutzt prinzipiell Schaugläser, wie sie häufig in der Vakuumtechnik angewandt werden. Das Glasfenster ist hierbei in der Weise modifiziert, dass es mit einem Loch, das z.B. durch Laser- oder Wasserstrahlschneiden hergestellt wird, versehen ist, wobei die selektiv durchlässige Membran, die aus einem Quarzfensterchip besteht, an das Glas anodisch angebondet ist. Der die Glasscheibe tragende metallische Rahmen kann an dem Gehäuse ohne Elastomer-Dichtungen UHV-fähig befestigt, z.B. geschweißt, werden, wobei UHV ein Ultrahochvakuum bezeichnet.

Bei dem in dem Gehäuse angeordneten Gasdrucksensor handelt es sich um eine Kaltkatodenmesszelle, die mindestens zwei Elektroden aufweist, vorzugsweise eine Penning-Messzelle oder ein Magnetron, wie in DE 100 13 882 A1 beschrieben. Da das Gehäuse erfindungsgemäß aus Metall besteht, ist es geeignet, eine der Elektroden der Messzelle zu bilden. Somit kann durch das metallische Gehäuse mindestens eine Elektrode, die sonst im Gehäuse innen angeordnet sein müsste, eingespart werden. Vorzugsweise besteht das Gehäuse aus amagnetischem Material, so dass das Magnetfeld einer außerhalb des Gehäuses angeordneten Magnetanordnung in das Gehäuse eindringen kann. Als Material für das Gehäuse eignet sich amagnetischer Edelstahl.

Gemäß einer bevorzugten Ausgestaltung der Erfindung ist vorgesehen, dass mindestens eine in dem Gehäuse angeordnete Elektrode mit einer an dem Gehäuse vorgesehenen TRIAX-Durchführung verbunden ist. Da das Gehäuse aus elektrisch leitendem Material besteht, ist eine isolierende Stromdurchführung erforderlich, die vorzugsweise mit einer Abschirmung versehen ist.

Ein besonderer Vorteil der Erfindung besteht darin, dass generell jegliche Art eines UHV-fähigen Schauglases als Membranwand benutzt werden kann. Das Schauglas ist lediglich so zu modifizieren; dass seine Glasscheibe ein Loch erhält, an dessen Rand dann die aus Silizium-Werkstoff bestehende Membran angebondet wird.

Im Folgenden werden unter Bezugnahme auf die Zeichnungen Ausführungsbeispiele der Erfindung näher erläutert.

Es zeigen:
- Figur 1: einen Längsschnitt durch einen Gassensor mit einer ersten Ausführungsform der Membranwand, und
- Figur 2: eine alternative Ausführungsform der Membranwand.

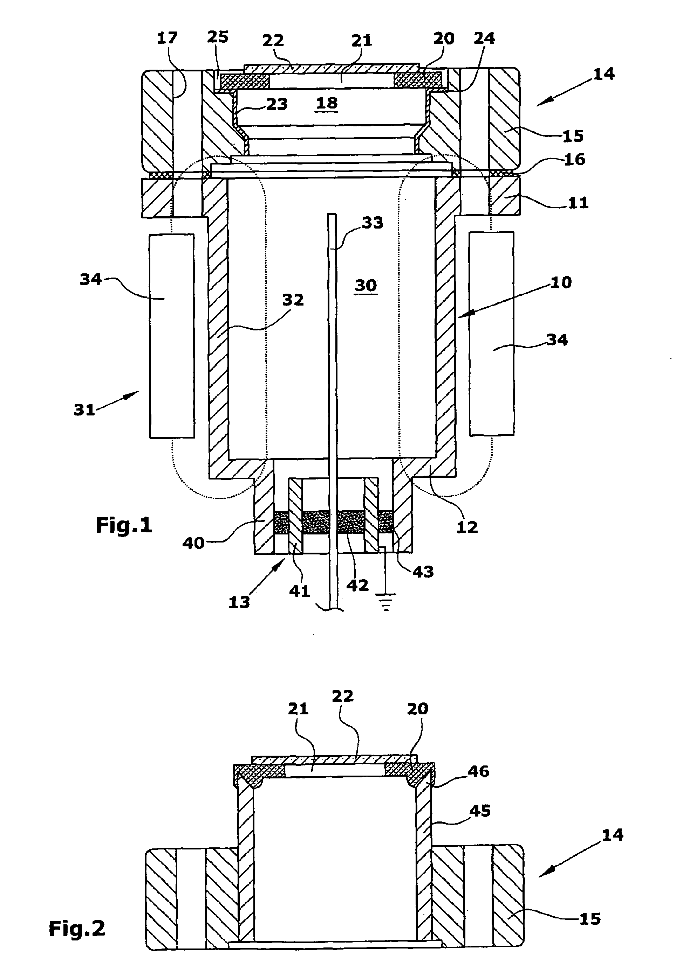

Der in Figur 1 dargestellte Gassensor weist ein zylindrisches Gehäuse 10 auf, das an einem Ende mit einem Flansch 11 versehen ist, und dessen anderes Ende einen Boden 12 bildet, in dem eine noch zu erläuternde Stromdurchführung 13 angeordnet ist. Das Gehäuse 10 besteht aus amagnetischem Edelstahl.

Das offene Ende des Gehäuses ist mit der Membranwand 14 verschlossen. Diese weist einen Rahmen 15 oder Flansch auf, der unter Zwischenlage einer Weichmetalldichtung 16 aus Kupfer mit dem Flansch 11 des Gehäuses 10 verbunden ist. Die Verbindung erfolgt durch Schrauben, die durch entsprechende Löcher 17 hindurch gesteckt und verspannt sind.

Der Rahmen 15 besteht ebenfalls aus Edelstahl. Er weist eine zentrische Durchgangsöffnung 18 auf, die an dem dem Gehäuse 10 abgewandten Ende mit einer Glasscheibe 20 aus Borosilikatglas verschlossen ist. Die Glasscheibe 20 enthält ein zentrisches Loch 21, das mit einer aus Silizium-Material bestehenden selektiv gasdurchlässigen Membran 22 bedeckt ist.

Zur Anpassung der unterschiedlichen Ausdehnungskoeffizienten zwischen Rahmen 15 und Glasscheibe 20 ist die Wand des Durchlasses 18 mit einem Ring 23 aus KOVAR, einer Eisen/Nickel-Legierung, ausgekleidet. Der Ring 23 weist an seinem äußeren Ende einen radial abstehenden Flansch 24 auf, der in einer Ausnehmung 25 des Rahmens 15 sitzt und deren Boden bedeckt. In der Ausnehmung 25 ist die Glasscheibe 20 versenkt angeordnet, wobei sie mit ihrem Rand gegen den Flansch 24 anliegt. Der Ring 23 ist sowohl mit dem Rahmen 15 als auch mit der Glasscheibe 20 thermisch verbondet.

In die Glasscheibe 20 ist mit Laser- oder Wasserstrahltechnik das Loch 21 eingeschnitten. Die äußere Fläche um das Loch herum wird dann bis zu optisch spiegelnder Qualität poliert. Danach wird die Membran 22, bei der es sich um einen Siliziumchip mit heliumdurchlässigen Fenstern, z.B. nach EP 0 831 964 B1, handelt, durch anodische Bondung auf die Glasfläche hochvakuumdicht aufgebondet. Dazu wird die Glasscheibe 20 und die Membran 22 auf Temperaturen zwischen 200 und 400° C aufgeheizt. Sodann wird über den Rahmen 15 und die Hülse 23 eine elektrische Gleichspannung angelegt, wodurch Ladungsträger zwischen Membran 22 und Glasscheibe 20 ausgetauscht werden und eine chemische Bindung entsteht. Dadurch kann an dem Übergang zur Glas-Membran eine elastomere Dichtung vollständig vermieden werden. Die Form des Loches 21 in der Glasscheibe 20 ist der Form der Membran 22 angepasst, wobei die Membran 22 jedoch größer ist als das Loch, so dass sie mit einem Rand auf der Glasscheibe 20 aufliegt.

Das Gehäuse 10 umschließt eine evakuierte Kammer 30, in der ein Ultrahochvakuum herrscht. Das Gehäuse ist Bestandteil eines Gasdrucksensors, welcher ein elektrisches Signal liefert, das dem in der Kammer 30 herrschenden Gasdruck entspricht. Der Gasdrucksensor 31 bildet ein Kaltkatodenmesssystem, im vorliegenden Fall ein Magnetron. Die Katode besteht aus der Wand 32 des Gehäuses 10 und die Anode 33 ist im Gehäuse 10 koaxial angeordnet und aus der Stromdurchführung 13 herausgeführt. Außerhalb des Gehäuses 10 ist um dieses herum eine Magnetanordnung 34 vorgesehen, die ein durch die gepunkteten Linien angedeutetes Dauermagnetfeld in der Kammer 30 erzeugt.

An dem Boden 12 des Gehäuses 10 befindet sich ein zylindrischer Ansatz 40, der die Stromdurchführung 13 aufnimmt. Diese weist einen koaxial zur Anode 33 angeordneten Abschirmring 41 auf. Zwischen der Anode 33 und dem Abschirmring 41 befindet sich eine ringförmige Keramikwand 42. Eine weitere hierzu koaxiale Keramikwand 43 befindet sich zwischen dem Abschirmring 41 und dem Ansatz 40. Diese Stromdurchführung wird als TRIAX-Durchführung bezeichnet. Der Abschirmring 41 ist mit Massepotential verbunden. Das System ermöglicht die Messung sehr kleiner Entladungsströme ohne Leckströme zur Messmasse.

Das Messsystem der Vorrichtung nach Figur 1 entspricht grundsätzlich dem in DE 100 31 882 A1 beschriebenen Magnetron-Messsystem, wobei jedoch als Katode die Gehäusewand 32 dient. Alternativ besteht die Möglichkeit, das Messsystem als Penning-Messsystem auszubilden, das ebenfalls in DE 100 31 882 A1 beschrieben ist, wobei mindestens eine der plattenförmigen Katoden durch das Gehäuse gebildet wird. In diesem Fall sollte das Gehäuse quaderförmig sein. Es besteht auch die Möglichkeit, das Gehäuse aus zwei gegeneinander isolierten Hälften zu fertigen und jede der beiden Gehäusehälften als Katode auszubilden.

Figur 2 zeigt eine alternative Ausführungsform der Membranwand 14. In einem Rahmen 15, der einen an das Gehäuse ansetzbaren Flansch bildet, sitzt eine Hülse 45 aus Stahl, die an den Rahmen 15 angeschweißt ist. Das äußere Ende der Hülse 45 ist bei 46 angeschärft, so dass sich eine ringförmige Spitze bildet. Mit dieser ist die Glasscheibe 20 thermisch verbondet. Die Glasscheibe 20 weist auch hier ein Loch 21 auf, das mit der aus Silizium-Material bestehenden selektiv für Helium durchlässigen Membran 22 bedeckt ist. Der Ring 23, der bei dem ersten Ausführungsbeispiel zur thermischen Anpassung dient, ist hierbei nicht erforderlich.

Die Membran 22 besteht aus einem Träger aus porösem Silizium, das an die Glasscheibe 20 angebondet ist. Dieser Träger ist mit einer dünnen Schicht bedeckt, die nur für das Testgas, z.B. Helium, selektiv durchlässig ist. Die aus Silizium-Material bestehende Membran ist hinsichtlich ihres thermischen Ausdehnungskoeffizienten an das Glas der Glasscheibe 20, das ebenfalls auf Silizium basiert, angepasst.

## Patentansprüche

1. Selektiver Gassensor mit einem evakuierten Gehäuse (10), das durch eine selektiv durchlässige Membran (22) abgeschlossen ist, und einen Gasdrucksensor (31) mit mindestens zwei Elektroden enthält,
**dadurch gekennzeichnet,**
**dass** das Gehäuse (10) aus Metall besteht und eine Membranwand (14) mit einem metallischen Rahmen (15) aufweist, an den eine Glasscheibe (20) angebondet ist, und dass die Glasscheibe (20) ein Loch (21) enthält, welches durch die Membran (22) verschlossen ist.

2. Gassensor nach Anspruch 1, **dadurch gekennzeichnet, dass** das Gehäuse (10) mindestens eine der Elektroden bildet.

3. Gassensor nach Anspruch 1 oder 2, **dadurch gekennzeichnet, dass** die Glasscheibe (20) mit einem Blech (23) aus einer Eisen/Nickel-Legierung an den aus Metall bestehenden Rahmen (15) angebondet ist.

4. Gassensor nach einem der Ansprüche 1 bis 3, **dadurch gekennzeichnet, dass** der Rahmen (15) ein Flansch ist, der an einen Flansch (11) des Gehäuses (10) unter Zwischenlage einer Weichmetalldichtung (16) angeschlossen ist.

5. Gassensor nach einem der Ansprüche 1 bis 4, **dadurch gekennzeichnet, dass** mindestens eine in dem Gehäuse (10) angeordnete Elektrode (33) mit einer an dem Gehäuse vorgesehenen TRIAX-Durchführung (13) verbunden ist.

6. Gassensor nach einem der Ansprüche 1 bis 5, **dadurch gekennzeichnet, dass** die Glasscheibe (20) direkt mit einem zugespitzten Rand (46) des metallischen Rahmens (15) anodisch verbondet ist.

7. Gassensor nach einem der Ansprüche 1 bis 6, **dadurch gekennzeichnet, dass** der Gasdrucksensor eine Penning-Messzelle aufweist.

8. Gassensor nach einem der Ansprüche 1 bis 6, **dadurch gekennzeichnet, dass** der Gasdrucksensor (31) ein Magnetron aufweist.

## Claims

1. A selective gas sensor with an evacuated housing (10) sealed by a selectively permeable membrane (22) and comprising a gas pressure sensor (31) with at least two electrodes,
**characterized in that**
the housing (10) is of metal and has a membrane wall (14) with a metal frame (15) to which a glass pane (20) is bonded, and the glass pane (20) has a hole (21) sealed by the membrane (22).

2. The gas sensor of claim 1, **characterized in that** the housing (10) forms at least one of the electrodes.

3. The gas sensor of claim 1 or 2, **characterized in that** the glass pane (20) is bonded to the metal frame (15) by means of a metal sheet (23) of an iron/nickel alloy.

4. The gas sensor of one of claims 1 to 3, **characterized in that** the frame (15) is a flange connected to a flange (11) of the housing (10) with a soft metal seal (16) being interposed.

5. The gas sensor of one of claims 1 to 4, **characterized in that** at least one electrode (33) arranged in the housing (10) is connected with a TRIAX bushing (13) provided at the housing.

6. The gas sensor of one of claims 1 to 5, **characterized in that** the glass pane (20) is anodically bonded directly to a beveled edge (46) of the metal frame (15).

7. The gas sensor of one of claims 1 to 6, **characterized in that** the gas pressure sensor comprises a Penning measuring cell.

8. The gas sensor of one of claims 1 to 6, **characterized in that** the gas pressure sensor (31) comprises a magnetron.

## Revendications

1. Détecteur de gaz sélectif comprenant un boîtier dans lequel on a fait le vide (10), qui est fermé par une membrane à perméabilité sélective (22) et qui renferme un détecteur de pression de gaz (31) comprenant au moins deux électrodes, **caractérisé en ce que** le boîtier (10) est fait de métal et présente une paroi à membrane (14) munie d'un cadre métallique (15) auquel est reliée une vitre (20) et **en ce que** la vitre (20) présente un trou (21) qui est obturé par la membrane (22).

2. Détecteur de gaz selon la revendication 1, **caractérisé en ce que** le boîtier (10) forme au moins une des électrodes.

3. Détecteur de gaz selon la revendication 1 ou 2, **caractérisé en ce que** la vitre (20) est reliée au cadre fait de métal (15) au moyen d'une tôle (23) en alliage fer/nickel.

4. Détecteur de gaz selon l'une des revendications 1 à 3, **caractérisé en ce que** le cadre (15) est une bride qui est raccordée à une bride (11) du boîtier (10) avec interposition d'un joint en métal doux (16).

5. Détecteur de gaz selon l'une des revendications 1 à 4, **caractérisé en ce qu'**au moins une électrode (33) placée dans le boîtier (10) est reliée à une traversée TRIAX (13) prévue au niveau du boîtier.

6. Détecteur de gaz selon l'une des revendications 1 à 5, **caractérisé en ce que** la vitre (20) est fixée directement à un bord effilé (46) du cadre métallique (15) par une liaison anodique.

7. Détecteur de gaz selon l'une des revendications 1 à 6, **caractérisé en ce que** le détecteur de pression de gaz comporte une cellule de mesure Penning.

8. Détecteur de gaz selon l'une des revendications 1 à 6, **caractérisé en ce que** le détecteur de pression de gaz (31) comporte un magnétron.
